# FASCICULE DE BREVET EUROPEEN

(11) **EP 1 275 429 B1**
(45) Date de publication et mention de la délivrance du brevet: **06.05.2004**
(21) Numéro de dépôt: 02291707.4
(22) Date de dépôt: 08.07.2002
(51) Int. Cl.: B01D 53/00, B01D 53/04

(54) **Procede et dispositif pour capter les vapeurs contenues dans un effluent gazeux.**
Verfahren und Vorrichtung zum Einfangen von in Abgasen enthaltenen Dämpfen
Process and device for the capture of vapors contained in a gas effluent

(30) Priorité: 10.07.2001 FR 0109138
(43) Date de publication de la demande: 15.01.2003
(73) Titulaire: Commissariat à l'Energie Atomique, 75752 Paris Cedex 15 (FR)
(72) Inventeur: Marvillet, Christophe, 13001 Marseille (FR); Chaix, Thierry, 74250 Viuz-en-Sallaz (FR)
(74) Mandataire: Audier, Philippe André

(56) Documents cités:
- EP-A- 0 976 439
- DE-A- 3 614 450
- US-A- 5 269 155
- US-A- 5 765 395
- US-A- 6 132 688

## Description

L'invention concerne un procédé pour capter, récupérer, des vapeurs, en particulier des vapeurs organiques contenues dans un effluent gazeux.

L'invention a également trait à un dispositif pour la mise en oeuvre de ce procédé.

De très nombreux procédés industriels utilisent ou produisent des composés organiques qui peuvent se retrouver au cours de procédé à l'état gazeux : ces composés organiques peuvent être utilisés comme solvants, par exemple, dans la chimie, la pharmacie, l'électronique ou la peinture, etc., ou comme fluide de refroidissement ou de chauffage, par exemple dans les procédés de fabrication de composants électroniques, ou les circuits thermiques, etc..

Ces composés organiques - généralement volatils, voire très volatils - doivent être généralement confinés dans des circuits fermés. Toutefois, dans les procédés industriels qui fonctionnent en mode « batch », c'est-à-dire avec des opérations de transformation discontinues, les circuits contenant ces fluides sont ouverts ou partiellement ouverts.

L'émission de vapeurs organiques vers le milieu extérieur est alors fréquente.

Ces émissions de vapeur de composés, dits COV (Composés Organiques Volatils) doivent, cependant, être canalisées et traitées, de telle sorte que le rejet de vapeur résiduel soit très faible. En effet, deux motivations fortes obligent les exploitants industriels à réduire ces rejets à l'atmosphère :
- des raisons économiques car les produits organiques ont des coûts très élevés et leur récupération est un impératif de rentabilité ;
- des raisons réglementaires qui constituent pour nombre de procédés une contrainte nouvelle qui tend à s'appliquer à l'ensemble des secteurs industriels ; car en effet, l'utilisation de solvants, et leur émission dans l'atmosphère, est réglementée par une législation aussi bien nationale qu'européenne.

En particulier, une directive européenne relative à la prévention et à la réduction intégrées des pollutions s'appliquera à certaines installations à partir de 2004, tandis qu'une autre directive européenne sur les émissions de COV dues à l'utilisation de solvants qui découle de la directive précédente concernera plus directement les procédés utilisateurs de solvants et s'appliquera à partir de 2005.

De plus, les émissions de COV sont, en France, soumises aux obligations fiscales, auxquelles sont soumises depuis 1995 les entreprises qui rejettent plus de 150 t/an de COV, hydrocarbures, etc., que ce soit sous forme de rejet canalisé ou de rejet diffus.

Enfin, les réglementations relatives aux COV concernent aussi les obligations liées au seuil maximal en ces substances à observer, notamment dans les ateliers, ainsi que les obligations de sécurité lorsque les fluides sont explosifs ou inflammables.

Les procédés de traitement d'effluents en vue de récupérer, de capter ou d'éliminer les vapeurs en particulier les vapeurs de composés organiques volatils (COV) qui s'y trouvent peuvent être classés en deux grandes catégories, à savoir, d'une part, les procédés destructifs et, d'autre part, les procédés récupératifs.

Les procédés destructifs peuvent être définis comme des procédés impliquant la destruction des composés présents dans les effluents à traiter, pendant ou après le traitement d'épuration des fluides. Ces techniques destructives sont notamment le traitement biologique, l'oxydation thermique ou incinération et l'oxydation catalytique.

Les procédés récupératifs sont des procédés qui permettent la récupération de la matière collectée après traitement des effluents. Ils offrent un grand choix de possibilités de réalisation, comme le recyclage dans le même procédé, ou dans un autre procédé, ou encore la vente des produits récupérés. Il existe essentiellement quatre grandes familles de procédés de traitement, dits « récupératifs » : l'adsorption, l'absorption, la condensation et l'utilisation de membranes.

Pour des raisons évidentes, tant économique qu'environnementale, les techniques récupératives sont et seront à privilégier.

Cependant, les procédés actuels de récupération présentent de nombreuses limites techniques.

En effet, le domaine d'application de chacun des procédés est extrêmement restreint, comme le montre le tableau I suivant qui résume les possibilités de récupération autorisées par chacun des procédés de traitement :

**Tableau I**

| Caractéristiques des composés volatils | Adsorption | Absorption | Condensation |
|---|---|---|---|
| Solvants cétoniques | Non | Oui | Oui |
| Polarité des solvants très différents | Oui | Non | Oui |
| % important d'alcool | non | Oui | Oui |
| Concentration < 7 g/m³ | Non | Non | Non |
| 7 g/m³ < concentration < 25 g/m³ | Oui | Oui | Non |
| Concentration > 25 g/m³ | non | non | Oui |
| Concentration : en g/Nm³. | | | |

Il en résulte que nombre d'applications ne sont pas correctement couvertes par ces procédés.

Les procédés par absorption et adsorption qui présentent les meilleures performances en terme de rejet, à savoir avec des valeurs inférieures à 50 mg/m³, sont généralement très sélectifs et certains composés volatils tels que des solvants ne peuvent être captés par les substrats solide et liquide avec lesquels ils sont en contact. Le traitement des mélanges pose souvent problème car ils peuvent nécessiter des substrats spécifiques pour chacune des vapeurs à capter.

Les procédés par adsorption et absorption nécessitent, en outre, un dispositif complémentaire pour permettre la régénération du substrat solide pour l'adsorption, et du substrat liquide pour l'absorption.

Le procédé par condensation ne permet d'atteindre généralement les valeurs réglementaires que si on choisit une température de fonctionnement très basse généralement inférieure à -70°C, que seul l'azote liquide permet d'obtenir avec des coûts d'investissement acceptables.

Des expériences industrielles de captation de solvant réalisées sur des installations industrielles importantes ont mis en évidence des difficultés réelles en terme :
- de performances insuffisantes, notamment en ce qui concerne le procédé par cryocondensation ;
- de fiabilité se manifestant notamment par la destruction d'incinérateurs, l'obturation rapide des séparateurs, des feux de charbon actifs, etc. ;
- de coût d'investissement et d'exploitation.

Un procédé pour capter les vapeurs, telles que les vapeurs de COV, contenues dans un effluent doit de plus remplir un certain nombre d'exigences, afin que sa mise en oeuvre puisse être envisagée favorablement.

Ainsi, notamment, le recyclage du composé formant la vapeur dans le procédé de fabrication dont l'effluent est issu, doit être possible, et ceci suppose en général un impératif de pureté de ce composé à l'issue du traitement de captation, de récupération ; les valeurs réglementaires qui s'imposeront dans l'avenir correspondent à des concentrations particulièrement faibles ; les conditions de fonctionnement des procédés industriels sont caractérisées par des fluctuations des paramètres de fonctionnement, par des vapeurs tels que des vapeurs de solvants variables suivant les procédés et par des types de vapeurs telles que des vapeurs de solvant variables dans le temps pour un même procédé. Il existe enfin une exigence de fiabilité, de coût et de facilité de maintenance pour les équipements mettant en oeuvre le procédé.

Il reste donc un besoin pour un procédé pour capter des vapeurs contenues dans un effluent gazeux qui réponde aux critères et exigences indiqués ci-dessus et qui présente, entre autres, un domaine d'application très large, quelles que soient les vapeurs présentes dans l'effluent gazeux, qui permette dans tous les cas d'atteindre les valeurs réglementaires, qui soit simple, fiable, peu coûteux, et qui comporte un nombre limité d'étapes.

Il existe encore un besoin pour un procédé pour capter des vapeurs contenues dans un effluent gazeux qui ne présente pas les inconvénients, défauts, limitations et désavantages des procédés de l'art antérieur et qui résolve les problèmes des procédés de l'art antérieur.

Le but de la présente invention est de fournir un procédé pour capter des vapeurs contenues dans un effluent gazeux, qui réponde, entre autres, à ce besoin et qui satisfait aux critères et exigences citées plus haut.

Ce but et d'autres encore sont atteints, conformément à l'invention par un procédé pour capter des vapeurs contenues dans un effluent gazeux, dans lequel, dans une première étape, l'effluent gazeux chargé en vapeurs passe tout d'abord dans un premier condenseur alimenté en fluide de refroidissement qui joue alors le rôle de condenseur pour condenser une partie des vapeurs, puis dans un premier lit adsorbant refroidi par le fluide de refroidissement circulant dans des premiers moyens d'échange de chaleur pour adsorber le reste des vapeurs, et l'effluent gazeux épuré est rejeté ; puis, dans une deuxième étape, lorsque le premier lit adsorbant est saturé par les vapeurs adsorbées, l'effluent gazeux chargé en vapeurs est dirigé dans un deuxième condenseur alimenté en fluide de refroidissement puis dans un deuxième lit adsorbant refroidi par le fluide de refroidissement circulant dans des deuxièmes moyens d'échange de chaleur, et l'effluent gazeux épuré est rejeté, tandis que simultanément le premier lit adsorbant est régénéré par chauffage avec un fluide de chauffage circulant dans les premiers moyens d'échange de chaleur, puis les vapeurs désorbées du premier lit adsorbant sont acheminées dans le deuxième condenseur alimenté alors en fluide de refroidissement où ces vapeurs désorbées du premier lit adsorbant sont condensées, puis lorsque le deuxième lit adsorbant est saturé, l'effluent gazeux chargé est dirigé de nouveau dans le premier condenseur alimenté en fluide de refroidissement puis dans le premier lit adsorbant refroidi par le fluide de refroidissement circulant dans les premiers moyens d'échange de chaleur, et le deuxième lit est régénéré, et ainsi de suite, le premier et le deuxième lit adsorbant étant alternativement, respectivement en phase d'adsorption et en phase de régénération ; procédé dans lequel le fluide de refroidissement est le fluide de l'évaporateur d'une pompe à chaleur (PAC) réversible, et le fluide de chauffage est le fluide du condenseur de la pompe à chaleur réversible.

Avantageusement, les vapeurs désorbées du premier lit adsorbant, respectivement du deuxième lit adsorbant, en phase de régénération, sont acheminées par un gaz constitué de préférence par l'effluent épuré dans le deuxième condenseur , respectivement le premier condenseur, puis dans le premier condenseur, respectivement le deuxième condenseur où les vapeurs sont condensées, et le gaz est renvoyé dans le premier lit adsorbant, respectivement le deuxième lit adsorbant en phase de régénération.

Ce procédé est en « boucle fermée », mais il peut être réalisé en « boucle ouverte ».

Il est alors envisageable d'utiliser l'air ambiant introduit par exemple par une soupape pour la régénération du premier lit adsorbant, respectivement le deuxième lit adsorbant, en phase de désorption. Dans ce cas, cet air chargé de vapeur de COV est envoyé dans le deuxième condenseur, respectivement le premier, puis conduit dans le deuxième lit adsorbant, respectivement le premier lit adsorbant, en phase d'adsorption avec l'effluent gazeux.

De manière fondamentale, le procédé selon l'invention consiste à associer deux principes de captation des vapeurs, à savoir l'adsorption et la condensation qui sont fondamentalement différents et, d'autre part, d'utiliser un équipement industriel très courant, à savoir une pompe à chaleur (PAC) réversible pour que cette association soit réalisée avec un véritable effet synergique en optimisant notamment les performances, et le rendement de l'ensemble du procédé.

En effet, la pompe à chaleur permet l'alimentation en fluide de refroidissement ou fluide basse température du premier condenseur ou du deuxième condenseur pour condenser partiellement les vapeurs contenues dans l'effluent ainsi que les vapeurs libérées lors de la régénération du premier ou du deuxième lit absorbant, c'est-à-dire du lit en phase de régénération, de désorption.

La pompe à chaleur permet aussi le refroidissement du premier ou du deuxième lit adsorbant, à savoir du lit qui est en phase de captation, d'adsorption pour accroître ainsi de manière très significative les performances de captation des vapeurs par adsorption. Ledit lit adsorbant (lit en phase d'adsorption) est généralement situé sur le circuit d'effluent gazeux immédiatement en aval du condenseur respectif, qui est le condenseur refroidi.

La pompe à chaleur permet aussi, à savoir du lit en phase de régénération, le chauffage du deuxième ou du premier lit absorbant par le fluide de chauffage ou fluide haute température qui est issu de la compression de la pompe à chaleur PAC, ce chauffage a pour effet d'assurer la régénération du lit absorbant en question. Le premier ou deuxième lit ainsi chauffé lors de cette phase de régénération libère des vapeurs concentrées, par exemple des vapeurs de solvants concentrés qui sont aisément liquéfiées dans le premier ou deuxième condenseur alimenté en fluide de refroidissement.

En d'autres termes, le procédé de l'invention consiste essentiellement à associer deux lits adsorbants, deux condenseurs (qui jouent alternativement et respectivement le rôle de condenseur lorsqu'ils sont alimentés en fluide de refroidissement ou d'évaporateur lorsqu'ils sont alimentés en fluide de chauffage), ainsi qu'une pompe à chaleur (PAC) dont les fonctions respectives sont décrites, dans ce qui suit :
- les lits d'adsorbants, alternativement fixent les vapeurs dans l'effluent gazeux qui y transite ;
- la pompe à chaleur au niveau de sa source froide permet la condensation des vapeurs, par exemple de COV, contenues dans l'effluent gazeux avant son passage dans le premier lit d'adsorbant (respectivement le deuxième lit adsorbant), la condensation des vapeurs issues du deuxième lit actif (respectivement du premier lit actif) en cours de régénération et enfin le refroidissement du premier lit d'adsorbant (respectivement du deuxième lit d'adsorbant) qui fonctionne alors en adsorbeur et assure ainsi une amélioration de la capacité d'adsorption de celui-ci. Au niveau de sa source chaude, la pompe à chaleur permet la régénération par apport de chaleur cédée par le condenseur de la PAC du lit d'absorbant saturé, c'est-à-dire en cours de régénération.

Le procédé selon l'invention, grâce à la combinaison, l'association, de deux procédés spécifiques adsorption et condensation, ainsi que d'une pompe à chaleur, répond aux besoins indiqués plus haut, satisfait aux critères et exigences énumérés ci-dessus et apporte une solution aux problèmes des procédés de l'art antérieur.

Autrement dit, l'effluent gazeux à traiter contenant les vapeurs que l'on souhaite récupérer, capturer, passe dans un premier temps sur un premier ou deuxième condenseur alimenté en fluide de refroidissement, puis sur le premier ou deuxième lit absorbant, à savoir le lit refroidi en phase d'adsorption, avant d'être rejeté, par exemple dans l'atmosphère.

Le refroidissement pour la condensation et l'adsorption - c'est-à-dire pour alimenter en fluide de refroidissement les moyens d'échange de chaleur dont est muni le lit adsorbant en phase d'adsorption - est assuré par l'évaporateur de la pompe à chaleur, cet évaporateur de la PAC constituant en fait à la fois ledit condenseur et lesdits moyens d'échange de chaleur alimentés tous deux en fluide de refroidissement.

D'autre part, le condenseur de la PAC est de manière originale, selon l'invention, utilisé comme source de chaleur pour la régénération d'un deuxième lit absorbant. La récupération des vapeurs issus de cette désorption est assurée par le premier condenseur en amont du premier lit adsorbant en phase d'adsorption. Le système est inversé lorsque ledit lit en adsorption est saturé et que le lit en désorption est régénéré.

Par rapport aux procédés de récupération de captation de vapeur existants, le procédé selon l'invention comporte de nombreux avantages.

Ainsi, le procédé de l'invention permet de traiter des effluents gazeux quelle que soit la nature des vapeurs à capter qui s'y trouvent.

Les vapeurs à capter sont généralement constituées par des vapeurs de composés organiques qui sont en particulier parmi choisis les composés organiques volatils (COV) qui sont généralement utilisés comme solvants.

Ces composés organiques ou leurs mélanges sont généralement choisis à partir de leur capacité à s'adsorber sur l'adsorbant.

Le procédé selon l'invention permet une récupération excellente des vapeurs, quel que soit le nombre de composés qui les composent, et même si ces composés sont de structures et de concentrations très différentes.

Le procédé de l'invention permet de traiter des vapeurs complexes comprenant, un nombre non limité de composés alors que les procédés de l'art antérieur ne permettaient le traitement que d'effluent comprenant des vapeurs avec un nombre faible - par exemple inférieur à 4 - de composés, voire même avec un seul composé.

Donc, le procédé selon l'invention assure la captation, la régénération, des vapeurs quelle que soit leur concentration.

En effet, la gamme de concentration de vapeurs qui peut être acceptée par le procédé selon l'invention va de très faibles concentrations pour lesquelles - à l'extrême - seul le lit adsorbant sera actif, jusqu'aux très fortes concentrations de vapeurs pour lesquelles la condensation sur le condenseur ou échangeur froid constituera une très grande part du processus de captation et l'adsorption sera un post-traitement permettant l'obtention des valeurs réglementaires de rejets.

Le procédé selon l'invention peut donc s'adapter, quasiment instantanément, pour traiter des effluents dont la concentration en vapeur est très différente.

Ceci n'est pas possible avec des procédés de l'art antérieur qui utilisent un seul mode de captation des vapeurs.

Cet avantage du procédé selon l'invention est particulièrement intéressant lorsque le procédé industriel producteur de vapeurs présente de très fortes variations dans le temps avec des concentrations de vapeur très fluctuante. Le procédé selon l'invention répond à cette difficulté qui traduit une réalité très fréquemment rencontrée dans l'industrie.

A titre d'exemple, la concentration totale en vapeurs à capter des effluents traités par le procédé de l'invention peut généralement aller de quelques centaines de mg/m³ à quelques kg/m³.

Le procédé selon l'invention peut traiter une très large gamme de débits d'effluents gazeux. Il n'existe pas en fait de limites réelles aux débits d'effluents à traiter, en effet, la taille des lits adsorbants peut être fort variable car il n'existe aucune difficulté à réaliser des lits de petite taille ou de grande taille et les puissances des PAC disponibles sur le marché sont très variées et vont par exemple de quelques kW à plusieurs dizaines de MW.

A titre d'exemple, les débits d'effluents gazeux qui peuvent être traités par le procédé de l'invention vont de quelques dizaines de m³/h à plus de 100 000 m³/h.

Le procédé selon l'invention permet d'éliminer un problème fréquent rencontré avec la captation par condensation qui est la formation de brouillard, par les composés formant la vapeur, tels que les COV, en sortie de condenseur. Ce brouillard est très difficile à arrêter par des séparateurs classiques. Dans notre procédé, le premier lit adsorbant (à savoir, celui en phase d'adsorption) est situé en aval du condenseur de vapeurs, par exemple de COV, et peut jouer le rôle de séparateur et annuler l'impact négatif de cette présence de très fines vésicules liquides dans l'effluent.

Le procédé selon l'invention apporte en outre une solution efficace et économique pour la régénération du lit adsorbant, qui se trouve, précisément, en phase de régénération et qui peut être soit le premier, soit le deuxième lit adsorbant.

En effet, la chaleur libérée par la PAC est valorisée, grâce à la manière spécifique dont celle-ci est incorporée dans le procédé de l'invention, et l'appel à des procédures complémentaires complexes et coûteuses pour la régénération des adsorbants devient inutile. Il n'est pas particulièrement plus nécessaire d'utiliser une chaudière complémentaire ou un réchauffage électrique.

Un gain en investissement et en coût énergétique en découle.

L'invention concerne également un dispositif pour la mise en oeuvre du procédé, tel qu'il a été décrit plus haut.

Le dispositif pour la mise en oeuvre du procédé selon l'invention comprend un premier condenseur alimenté alternativement en fluide de refroidissement et en fluide de chauffage, un premier lit adsorbant muni de premiers moyens d'échange de chaleur alimentés alternativement en fluide de refroidissement et en fluide de chauffage, un deuxième condenseur alimenté alternativement en fluide de refroidissement et en fluide de chauffage et un deuxième lit absorbant muni de deuxièmes moyens d'échange de chaleurs alimentés alternativement en fluide d'évaporation et en fluide de chauffage, des moyens pour faire circuler un courant d'effluent gazeux contenant des vapeurs alternativement dans le premier condenseur alimenté en fluide de refroidissement puis dans le premier lit adsorbant refroidi par le fluide de refroidissement circulant dans les premiers moyens d'échange de chaleur, ou dans le deuxième condenseur alimenté en fluide de refroidissement puis dans le deuxième lit adsorbant refroidi par le fluide de refroidissement circulant dans les deuxièmes moyens d'échange de chaleur, et pour rejeter l'effluent gazeux épuré, l'autre condenseur étant simultanément alimenté en fluide de chauffage et l'autre lit adsorbant étant simultanément régénéré par chauffage avec le fluide de chauffage circulant dans les moyens d'échange de chaleur dont il est muni, le premier ou deuxième condenseur et les premiers ou deuxièmes moyens d'échange de chaleur alimentés en fluide de refroidissement étant alternativement constitués respectivement par l'évaporateur d'une pompe à chaleur réversible, et l'autre condenseur et les autres moyens d'échange de chaleur alimentés en fluide de chauffage étant alternativement constitués respectivement par le condenseur d'une pompe à chaleur réversible.

Avantageusement, le dispositif comprend, en outre, des moyens formant circuit fermé pour acheminer dans un gaz constitué de préférence par l'effluent épuré, les vapeurs désorbées du lit en phase de régénération dans le premier, respectivement le deuxième condenseur alimenté en fluide de chauffage, puis dans le deuxième, respectivement le premier condenseur, alimenté en fluide de refroidissement où les vapeurs sont condensées puis renvoyer le gaz dans le lit en phase de régénération.

Avantageusement, le dispositif comprend, en outre (boucle ouverte), des moyens formant un circuit ouvert pour acheminer dans de l'air ambiant, les vapeurs désorbées du lit en phase de régénération dans le premier, respectivement le deuxième condenseur alimenté en fluide de chauffage, puis dans le deuxième lit, respectivement le premier lit, adsorbant en phase d'adsorption avec l'effluent gazeux, et pour rejeter l'air avec l'effluent gazeux épuré.

Avantageusement, le premier et le deuxième condenseurs sont séparés en deux parties, la première de ces parties étant située au voisinage respectivement du premier ou du deuxième lit adsorbant, la première et la deuxième partie du condenseur alimenté en fluide de refroidissement recevant respectivement l'effluent contenant les vapeurs à capter et le gaz acheminant les vapeurs désorbées du lit adsorbant en phase de régénération.

De préférence, le dispositif comprend en outre des moyens pour recueillir les vapeurs condensées issues des première et deuxième parties du condenseur alimenté en fluide de refroidissement.

Avantageusement, dans le dispositif, le premier condenseur et le premier lit adsorbant sont placés dans une première enceinte et le deuxième condenseur et le deuxième lit adsorbant sont placés dans une deuxième enceinte, lesdites première et deuxième enceintes constituant respectivement alternativement les enceintes de l'évaporateur et du condenseur de la pompe à chaleur.

Les effets et avantages du dispositif selon l'invention ont déjà été détaillés plus haut dans la description du procédé.

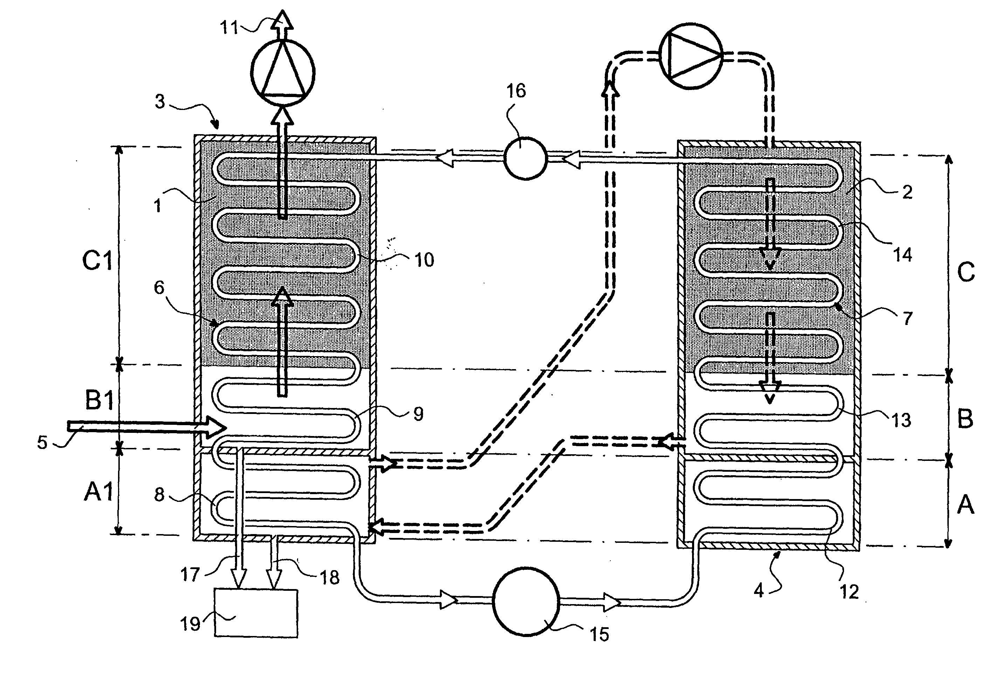

L'invention va maintenant être décrite de manière plus précise dans la description qui suit, donnée à titre illustratif et non limitatif et faite en référence au dessin joint, dans lequel la figure 1 est une vue en coupe schématique d'un dispositif pour la mise en oeuvre du procédé de l'invention.

Le dispositif représenté sur la figure 1 comprend un premier lit adsorbant (1) qui se trouve sur la figure 1 en phase de d'adsorption et un deuxième lit adsorbant (2) qui se trouve sur la figure en phase de désorption ou régénération.

Ce dispositif comprend également deux circuits d'effluents gazeux, équipés par exemple chacun d'un ventilateur, à savoir :
- un circuit ouvert (représenté par les flèches en traits gras sur la figure 1) recevant l'effluent gazeux (5) chargé de vapeurs, issu par exemple d'un procédé industriel et dans lequel se trouve inclus l'évaporateur (6) de la pompe à chaleur (PAC), qui joue en fait le rôle à la fois de premier condenseur (9), ainsi que d'appareil de refroidissement (ou de moyens d'échange de chaleur alimentés en fluide de refroidissement) du premier lit adsorbant (1), qui est celui (1) se trouvant en phase d'adsorption ;
- un circuit fermé dans le cas de la figure 1 (représenté par les flèches en traits gras en pointillés) véhiculant un gaz épuré envoyé sur le condenseur (7) de la pompe à chaleur (PAC), puis une fois chargé des vapeurs issues de la désorption du deuxième lit, sur l'évaporateur de la pompe à chaleur (premier condenseur) pour liquéfier les vapeurs, par exemple les vapeurs de COV désorbées. Ce circuit peut aussi être réalisé en boucle ouverte en utilisant l'air ambiant pour la désorption du deuxième lit d'adsorbant.

Le deuxième lit en désorption peut judicieusement être maintenu à pression inférieure à la pression atmosphérique, grâce à une pompe à vide classique (non représentée) pour intensifier le phénomène de désorption.

Les deux lits adsorbants (1, 2) sont alternativement, par exemple avec une période de 1 à 10 heures, utilisés pour l'un dans une phase de captation, adsorption (lit de gauche (1) sur la figure 1 des vapeurs à basse température, par exemple à de -20°C à +10°C, pour l'autre (2) dans une phase de désorption ou régénération à haute température, par exemple à de 50°C à 70°C.

En conséquence, le dispositif selon l'invention comprend également un circuitage adapté et un jeu de vannes sur le circuit de fluide frigorigène de la pompe à chaleur (PAC) et de l'effluent gazeux qui permet aisément le basculement régulier d'un fonctionnement, et d'un lit, à l'autre, en faisant dans le même temps travailler l'échangeur de la PAC utilisé initialement en évaporateur comme un condenseur, et, de la même façon, l'échangeur initialement utilisé en condenseur comme un évaporateur. C'est pourquoi, la pompe à chaleur est dénommée par la terminologie « réversible ».

Le dispositif pour la mise en oeuvre du procédé selon l'invention se caractérise pratiquement par le couplage de la pompe à chaleur (PAC) et des deux lits d'absorbant dans les dispositions suivantes des principaux composants du système :
. L'évaporateur (6) du fluide frigorigène véhiculé dans la PAC (point froid de l'installation) peut être par exemple constitué de trois parties :
   1. une partie emmergée (8) du premier lit d'adsorbant (partie A₁) pour condenser les vapeurs (par exemple de COV) issues du lit en phase de régénération (2) (deuxième lit) qu'il est possible de liquéfier à la température d'évaporation de la PAC ;
   2. une partie également emmergée (9) du premier lit d'adsorbant (séparée de la partie A₁ précédente de façon étanche sur le circuit gaz) (partie B₁) permettant la condensation des vapeurs (par exemple de COV) provenant de l'effluent gazeux, par exemple issu d'un procédé industriel ;
   3. une partie immergée (10) dans le premier lit d'absorbant (1) (partie C₁) (en aval de la partie précédente dans le circuit d'effluent gazeux provenant par exemple d'un procédé industriel) qui permet aux vapeurs (par exemple de COV) résiduelles (c'est-à-dire non condensées dans la partie précédente (9)) d'être adsorbées sur des adsorbants classiques, tels que du charbon actif, des zéolithes avant le rejet définitif de l'effluent épuré (11), exempt de vapeurs à l'atmosphère.
. Le condenseur (7) de fluide frigorigène véhiculé dans la PAC (point chaud de l'installation) est également constitué de trois parties (on rappelle que le condenseur devient évaporateur dans la seconde phase du cycle) :
   4. une partie emmergée (12) du deuxième lit (2) d'absorbant (partie A) neutralisée lors de cette phase de désorption, de régénération du deuxième lit d'absorbant (2) ;
   5. une partie emmergée (13) du lit d'absorbant (2) (partie B) pour réchauffer le gaz épuré et favoriser la désorption des vapeurs du deuxième lit (2) en cours de régénération ;
   6. une partie immergée (14) dans le lit d'absorbant (partie C) (en aval de la partie précédente dans le circuit d'effluent gazeux) qui permet la régénération des adsorbants, par exemple des charbons actifs ou des zéolithes constituant l'adsorbant par apport de chaleur provenant des tubes condenseur et de l'air épuré préchauffé.

On va maintenant expliquer, à l'aide de la figure 1, la circulation des fluides dans une des phases de fonctionnement du dispositif ou système pour la mise en oeuvre du procédé selon l'invention :
- le premier lit adsorbant (1) situé à gauche de la figure est en phase d'adsorption, le deuxième lit (2) situé à droite de la figure est en phase de régénération (désorption de vapeur) ;
- le dispositif dans lequel se situe le lit en phase d'adsorption est constitué d'un échangeur, par exemple tubulaire ou à plaque (6) constitué de trois parties (A₁, B₁ et C₁). Au travers des parties B₁ et C₁, circule l'effluent gazeux à traiter (flèche en traits gras), par exemple provenant d'un procédé industriel, la partie C₁ qui est le lit adsorbant proprement dit est formé d'un échangeur (10) immergé dans un lit (1), par exemple de charbon actif ou de zéolithe, avec une circulation du fluide frigorigène en évaporation provenant de la vanne de détente (16) de la PAC pour permettre le refroidissement du lit et l'évacuation de la chaleur correspondant au phénomène d'adsorption. La partie B₁ (9) de l'échangeur est libre de tout lit adsorbant : dans cette partie, l'effluent gazeux est partiellement épuré par condensation des vapeurs sur la paroi froide de l'échangeur (9).

On notera que l'effluent gazeux circule de B₁ vers C₁, alors que le fluide frigorigène circule de préférence de C₁ vers A₁, en passant par B dans un ensemble de tubes ou de plaques qui traversent les trois zones. La partie A séparée de façon étanche des parties B₁ et C₁ reçoit dans le cas d'une boucle de désorption fermée, l'effluent gazeux issu de l'autre lit (2) en phase de régénération. Les vapeurs condensées sont recueillies (17, 18) en partie basse des compartiments B₁ et A₁ et renvoyées généralement par gravité vers un ballon de stockage (19).
- le dispositif dans lequel se situe le lit en phase de régénération (2) présente une configuration géométrique parfaitement identique au lit en phase d'adsorption (1). Par contre, les fonctions assurées par ce dispositif sont tout à fait distinctes, grâce à une circulation et des températures différentes des fluides, à savoir de l'effluent gazeux et du fluide frigorigène. Ainsi, le fluide frigorigène en sortie du compresseur (15) de la PAC est injecté dans la partie A du dispositif : la vapeur de ce fluide se refroidit et se condense en libérant la chaleur nécessaire à la régénération de l'adsorbant, par exemple du charbon actif ou des zéolithes.

La régénération des adsorbants, par exemple des charbons actifs se fait classiquement par l'action combinée du gaz épuré préchauffé et de l'apport de calories de l'échangeur (14) dans cette partie à droite sur la figure du dispositif. Pour favoriser cette phase de régénération, la mise sous un vide partiel est préférable. Ceci est réalisé grâce au soutirage par une pompe à vide d'une partie du gaz contenu dans les circuits. L'effluent gazeux sortant du lit à régénérer (2) est fortement chargé en vapeur : une fois envoyé sur l'échangeur à basse température (8) (partie A₁) de l'autre lit, il est à nouveau épuré et peut être réinjecté dans le lit à régénérer (2) dans le cas d'une boucle fermée.

Le mode de fonctionnement décrit peut durer plusieurs heures : la durée de cette période est dépendante des concentrations de l'effluent provenant, par exemple, d'un procédé industriel, du type de vapeurs organiques à traiter, et du volume du lit adsorbant.

Dès que le lit approche d'un état de saturation, il est nécessaire de réaliser le basculement vers un mode de fonctionnement dans lequel la fonction des lits est inversée : le lit (à gauche de la figure) saturé en vapeur notamment organique doit alors être réchauffé pour être régénéré, le lit à droite de la figure épuré peut être refroidi pour permettre la captation des vapeurs, par exemple organiques. Ce basculement est réalisé grâce à un circuitage adéquat des fluides gazeux et du fluide frigorigène. Des vannes commandées (non représentées) complètent ce dispositif pour assurer une bascule automatique du fonctionnement.

La mise en route de la phase de bascule peut être commandée :
- à partir de l'information sur la qualité du rejet vers l'atmosphère, grâce à un capteur situé en aval des lits sur la cheminée d'évacuation des effluents ;
- plus simplement, à partir d'une horloge, après avoir défini au préalable une durée de fonctionnement de chacune des phases ;
- ou à partir d'une combinaison de ces deux techniques.

L'invention va maintenant être décrite en référence aux exemples suivants, donnés à titre illustratif et non limitatif.

Les exemples qui suivent concernent deux exemples d'installation selon l'invention, et sont relatifs au traitement de rejet avec des vapeurs, telles que des vapeurs de COV ayant des caractéristiques différentes.

### Exemple 1

Cet exemple concerne le traitement d'effluents gazeux contenant de l'isopropanol.

Une usine de chimie fine était équipée d'une installation fonctionnant sur le principe d'une condensation à basse température (azote liquide). Le coût de l'investissement de cette installation était de 3 MF. Les performances satisfaisantes pour la réglementation actuelle de cette installation en régime nominale de fonctionnement s'étaient révélées très insuffisantes lorsque des variations brutales de concentrations intervenaient. Par ailleurs, cette installation ne présentait pas des performances suffisantes pour les futures réglementations.

Le procédé et le dispositif selon l'invention pour équiper cette usine répondent à ces nouvelles exigences avec des coûts d'investissement et de fonctionnement inférieurs.

Le rejet de cette usine est de 200 Nm³/h à 293 K et contient 100 g d'isopropanaol/Nm³ et 10 g d'eau/kg d'air sec. L'objectif est de réaliser un dispositif répondant aux futures réglementations européennes : pour cela, les conditions de rejets à l'atmosphère doivent être, avec une petite marge de sécurité, de 130 mg/m³. L'isopropanol est un composé assez volatil donc difficilement traitable uniquement par condensation (en effet, la température de condensation doit être inférieure à -80°C), mais qui s'adsorbe facilement. Une étude paramétrique nous a permis d'identifier les conditions optimales de dimensionnement : et nous a conduit à imposer une température de -15°C à l'évaporateur de la PAC.

On a donc prévu pour la conception des lits d'adsorption du dispositif selon l'invention, deux caissons de section carrée avec un côté de 55 cm et une hauteur de 1,1 m, contenant 96,3 kg de charbon actif chacune.

La puissance frigorifique nécessaire est de 7 500 W pour le groupe froid (à la température de - 15°C). Les échangeurs présentent pour chacun des lits des surfaces d'échange de 20,5 m² pour l'effluent du procédé (C, C₁ et B, B₁) et de 3 m² pour récupérer les vapeurs qui proviennent de la désorption (partie A, A₁).

Le coût d'investissement n'excède pas 500 kF pour cette installation et la consommation énergétique moyenne est de 6 kWh.

Sur ces deux postes, l'installation proposée selon l'invention permet de réduire les coûts de façon très forte, par rapport à l'installation existante.

### Exemple 2

Cet exemple a pour but d'évaluer l'impact du changement de vapeurs à traiter sur le dimensionnement de l'équipement.

Il concerne le traitement d'effluents gazeux contenant de l'éthanol.

L'éthanol est un composé plus léger que l'isopropanol et également plus difficilement condensable. Par ailleurs, son adsorption est moyenne. Nous prenons un rejet dans des conditions identiques au précédent. La puissance frigorifique nécessaire passe à 8 760 W, mais pour une température froide de -20°C. Les surfaces d'échanges sont de 22,7 m² pour le rejet du procédé et de 2,6 m², afin de récupérer les solvants issus de la régénération. Sous certaines conditions, nous obtenons deux caissons de 55 cm de côté et de 1,2 m de hauteur, contenant chacun 112 kg de charbon actif.

Ainsi, nous observons très peu de différence entre les deux dimensionnements précédents se rapportant pourtant à des substances ayant des caractéristiques distinctes. Notre procédé aura donc la possibilité de se voir attribué bons nombres de rejets auxquels il pourra apporter chaque fois des solutions efficaces.

## Revendications

1. Procédé pour capter des vapeurs contenues dans un effluent gazeux, dans lequel, dans une première étape, l'effluent gazeux chargé en vapeurs passe tout d'abord dans un premier condenseur alimenté en fluide de refroidissement qui joue alors le rôle de condenseur pour condenser une partie des vapeurs, puis dans un premier lit adsorbant refroidi par le fluide de refroidissement circulant dans des premiers moyens d'échange de chaleur pour adsorber le reste des vapeurs, et l'effluent gazeux épuré est rejeté ; puis, dans une deuxième étape, lorsque le premier lit adsorbant est saturé par les vapeurs adsorbées, l'effluent gazeux chargé en vapeurs est dirigé dans un deuxième condenseur alimenté en fluide de refroidissement puis dans un deuxième lit adsorbant refroidi par le fluide de refroidissement circulant dans des deuxièmes moyens d'échange de chaleur, et l'effluent gazeux épuré est rejeté, tandis que simultanément le premier lit adsorbant est régénéré par chauffage avec un fluide de chauffage circulant dans les premiers moyens d'échange de chaleur, puis les vapeurs désorbées du premier adsorbant sont acheminées dans le deuxième condenseur alimenté alors en fluide de refroidissement où ces vapeurs désorbées du premier lit adsorbant sont condensées, puis lorsque le deuxième lit adsorbant est saturé, l'effluent gazeux chargé est dirigé de nouveau dans le premier condenseur alimenté en fluide de refroidissement et le premier lit adsorbant refroidi par le fluide de refroidissement circulant dans les premiers moyens d'échange de chaleur, et le deuxième lit est régénéré, et ainsi de suite, le premier et le deuxième lit adsorbant étant alternativement, respectivement en phase d'adsorption et en phase de régénération ; procédé dans lequel le fluide de refroidissement est le fluide de l'évaporateur d'une pompe à chaleur (PAC) réversible, et le fluide de chauffage est le fluide issu du condenseur de la pompe à chaleur réversible.

2. Procédé selon la revendication 1 dans lequel les vapeurs désorbées du premier lit adsorbant, respectivement du deuxième lit adsorbant, en phase de régénération, sont acheminées par un gaz constitué de préférence par l'effluent épuré dans le deuxième condenseur, respectivement le premier condenseur, puis dans le premier condenseur, respectivement le deuxième condenseur où les vapeurs sont condensées, et le gaz est renvoyé dans le premier lit adsorbant, respectivement le deuxième lit adsorbant en phase de régénération.

3. Procédé selon la revendication 1, dans lequel les vapeurs désorbées du premier lit adsorbant, respectivement du deuxième lit adsorbant, en phase de régénération sont acheminées de l'air ambiant introduit, par exemple, par une soupape dans le deuxième condenseur, respectivement le premier condenseur, puis l'air est envoyé dans le premier lit adsorbant, respectivement le deuxième lit adsorbant en phase d'adsorption avec l'effluent gazeux, puis rejeté avec ledit effluent gazeux épuré.

4. Procédé selon l'une quelconque des revendications précédentes dans lequel les vapeurs à capter sont constituées par des vapeurs de composés organiques choisis en particulier parmi les composés organiques volatils (COV).

5. Dispositif pour la mise en oeuvre du procédé selon l'une quelconque des revendications 1 à 4 comprenant un premier condenseur/évaporateur (8, 9, A₁, B₁) alimenté alternativement en fluide de refroidissement et en fluide de chauffage, un premier lit adsorbant (1) muni de premiers moyens d'échange de chaleur (10) alimentés alternativement en fluide de refroidissement et en fluide de chauffage, un deuxième condenseur (12, 13, B, A) alimenté alternativement en fluide de refroidissement et en fluide de chauffage et un deuxième lit absorbant (2) muni de deuxièmes moyens d'échange de chaleur (14, C) alimentés alternativement en fluide d'évaporation et en fluide de chauffage, des moyens pour faire circuler un courant d'effluent gazeux (5) contenant des vapeurs alternativement dans le premier condenseur (8, 9, A₁, B₁) alimenté en fluide de refroidissement puis dans le premier lit adsorbant (1) refroidi par le fluide de refroidissement circulant dans les premiers moyens d'échange de chaleur (10, C₁), ou dans le deuxième condenseur (12, 13, B, A) alimenté en fluide de refroidissement puis dans le deuxième lit adsorbant (2) refroidi par le fluide de refroidissement circulant dans les deuxièmes moyens d'échange de chaleur (14, C), et pour rejeter l'effluent gazeux épuré, l'autre condenseur étant simultanément alimenté en fluide de chauffage et l'autre lit adsorbant étant simultanément régénéré par chauffage avec le fluide de chauffage circulant dans les moyens d'échange de chaleur dont il est muni, le premier ou deuxième condenseur/évaporateur et les premiers ou deuxièmes moyens d'échange de chaleur alimentés en fluide de refroidissement étant alternativement constitués respectivement par l'évaporateur (6) d'une pompe à chaleur réversible, et l'autre condenseur/évaporateur et les autres moyens d'échange de chaleur alimentés en fluide de chauffage étant alternativement constitués respectivement par le condenseur (7) d'une pompe à chaleur réversible.

6. Dispositif selon la revendication 5 comprenant en outre des moyens formant circuit fermé pour acheminer dans un gaz constitué de préférence par l'effluent épuré, les vapeurs désorbées du lit en phase de régénération dans le premier, respectivement le deuxième condenseur (8, 9, A₁, B₁ ; 12, 13, B, A) alimenté en fluide de chauffage, puis dans le deuxième, respectivement le premier condenseur alimenté en fluide de refroidissement où les vapeurs sont condensées puis renvoyer le gaz dans le lit (2) en phase de régénération.

7. Dispositif selon la revendication 6 comprenant, en outre, des moyens formant un circuit ouvert pour acheminer dans de l'air ambiant, les vapeurs désorbées du lit en phase de régénération dans le premier, respectivement le deuxième condenseur alimenté en fluide de chauffage, puis dans le deuxième lit, respectivement le premier lit (2, 1), adsorbant en phase d'adsorption avec l'effluent gazeux (5), et pour rejeter l'air avec l'effluent gazeux épuré (11).

8. Dispositif selon la revendication 7, dans lequel le premier et le deuxième condenseurs sont séparés en deux parties, la première de ces parties (9, 13, B₁, B) étant située au voisinage respectivement du premier ou du deuxième lit adsorbant, la première (9, B₁) et la deuxième (8, A₁) partie du condenseur alimenté en fluide de refroidissement recevant respectivement l'effluent (5) contenant les vapeurs à capter et le gaz acheminant les vapeurs désorbées du lit adsorbant en phase de régénération.

9. Dispositif selon la revendication 8 comprenant en outre des moyens (17, 18, 19) pour recueillir les vapeurs condensées issus des première (9, B₁) et deuxième (8, A₁) parties du condenseur alimenté en fluide de refroidissement.

10. Dispositif selon l'une quelconque des revendications 5 à 9 dans lequel le premier condenseur (8, 9, A₁, B₁) et le premier lit adsorbant (1) sont placés dans une première enceinte et le deuxième condenseur et le deuxième lit adsorbant (2) d'autre part sont placés dans une deuxième enceinte lesdites première et deuxième enceintes constituant respectivement alternativement les enceintes de l'évaporateur (6) et du condenseur (7) de la pompe à chaleur.

## Patentansprüche

1. Verfahren zum Einfangen von in einem Abgas enthaltenen Dämpfen, bei dem in einem ersten Schritt das die Dämpfe enthaltende Abgas zunächst in einen ersten Kondensator strömt, der mit einem Kühlfluid gespeist wird, so dass ein Teil der Dämpfe in diesem Kondensator kondensiert, und dann in ein Adsorptionsbett strömt, gekühlt durch das Kühlfluid, das durch erste Wärmetauscheinrichtungen fließt, um den Rest der Dämpfe zu adsorbieren, woraufhin der Rest des gereinigten Gases ausgeschieden wird; sodann, in einem zweiten Schritt, wenn das erste Adsorptionsbett durch die adsorbierten Dämpfe gesättigt ist, wird das die Dämpfe enthaltende Abgas in einen zweiten mit Kühlfluid gespeisten Kondensator geleitet, dann in ein zweites Adsorptionsbett, gekühlt durch das Kühlfluid, das durch zweite Wärmetauscheinrichtungen fließt, und dann als gereinigtes Abgas ausgeschieden, während simultan das erste Adsorptionsbett regeneriert wird durch Erwärmung mit einem Heizfluid, das durch die ersten Wärmetauscheinrichtungen fließt, woraufhin die desorbierten Dämpfe des ersten Adsorptionsbetts in den zweiten Kondensator geleitet werden, der dann mit Kühlfluid gespeist wird und wo diese desorbierten Dämpfe des ersten Adsorptionsbetts kondensieren, wobei dann, wenn das zweite Adsorptionsbett gesättigt ist, das die Dämpfe enthaltende Abgas wieder in den mit Kühlfluid gespeisten ersten Kondensator und das erste Adsorptionsbett geleitet wird, das gekühlt wird durch das Kühlfluid, das durch die ersten Wärmetauscheinrichtungen fließt, und das zweite Bett regeneriert wird, und so weiter, und dabei das erste und das zweite Adsorptionsbett sich abwechselnd in der Adsorptionsphase und der Regenerationsphase befinden; wobei in diesem Verfahren das Kühlfluid das Fluid des Verdampfers einer Umkehrwärmepumpe ist, und das Heizfluid das aus dem Kondensator der Umkehrwärmepumpe stammende Fluid ist.

2. Verfahren nach Anspruch 1, bei dem die Dämpfe, desorbiert von dem ersten Adsorptionsbetts beziehungsweise dem zweiten Adsorptionsbetts, in der Regenerationsphase durch ein Gas befördert werden, das vorzugsweise gebildet wird durch das in dem zweiten Kondensator, beziehungsweise dem ersten Kondensator, dann in dem ersten Kondensator, beziehungsweise dem zweiten Kondensator, wo die Dämpfe kondensieren, gereinigte Abgas, und das Gas in der Regenerationsphase in das erste Adsorptionsbett beziehungsweise das zweite Adsorotionsbett zurückgeleitet wird.

3. Verfahren nach Anspruch 1, bei dem die Dämpfe, desorbiert von dem ersten Adsorptionsbetts, beziehungsweise dem zweiten Adsorptionsbetts, in der Regenerationsphase durch die Umgebungsluft befördert werden, die zum Beispiel durch ein Ventil in den zweiten Kondensator beziehungsweise den ersten Kondensator eingespeist wird, wobei die Luft dann in der Adsorptionsphase mit dem Abgas in das erste beziehungsweise das zweite Adsorptionsbett geleitet wird und dann mit dem gereinigten Abgas ausgeschieden wird.

4. Verfahren nach einem der vorangehenden Ansprüche, bei dem die einzufangenden Dämpfe gebildet werden durch Dämpfe von organischen Verbindungen, insbesondere ausgewählt unter den flüchtigen organischen Verbindungen.

5. Vorrichtung zur Anwendung des Verfahrens nach einem der Ansprüche 1 bis 4, mit einem ersten KondensatorNerdampfer (8, 9, A₁, B₁), abwechselnd mit Kühlfluid und Heizfluid gespeist, einem ersten Absorptionsbett (1) mit ersten Wärmetauscheinrichtungen (10) abwechselnd mit Kühlfluid und Heizfluid gespeist, einem zweiten Kondensator (12, 13, B, A), abwechselnd mit Kühlfluid und Heizfluid gespeist, und einem zweiten Absorptionsbett (2) mit zweiten Wärmetauscheinrichtungen (14, C) abwechselnd mit Kühlfluid und Heizfluid gespeist, Einrichtungen zum Fördern eines Dämpfe enthaltenden Abgasstroms (5) in den mit Kühlfluid gespeisten ersten Kondensator (8, 9, A₁, B₁) und dann in das erste Adsorptionsbett, (1), gekühlt durch das in den ersten Wärmetauscheinrichtungen (10, C₁) fließende Kühlfluid, oder in den mit Kühlfluid gespeisten zweiten Kondensator (12, 13, B, A) und dann in das zweite Adsorptionsbett (2), gekühlt durch das in den zweiten Wärmetauscheinrichtungen (14, C) fließende Kühlfluid, wobei zum Ausscheiden des gereinigten Abgases der andere Kondensator simultan mit einem Heizfluid gespeist wird und das andere Adsorptionsbett simultan regeneriert wird durch Heizen mit dem Heizfluid, das durch die Wärmetauscheinrichtungen fließt, mit denen es ausgestattet ist, und der erste oder zweite Kondensator/Verdampfer und die ersten oder zweiten Wärmtauscheinrichtungen, gespeist mit Kühlfluid, abwechselnd jeweils durch den Verdampfer (6) einer Umkehrwärmepumpe gebildet werden, und der andere KondensatorNerdampfer und die anderen Wärmtauscheinrichtungen, gespeist mit Kühlfluid, abwechselnd jeweils durch den Kondensator (7) einer Umkehrwärmepumpe gebildet werden.

6. Vorrichtung nach Anspruch 5, mit außerdem Einrichtungen zur Herstellung eines geschlossenen Kreislaufs, um in einem Gas, vorzugsweise gebildet durch das gereinigte Abgas, die in der Regenerationsphase desorbierten Dämpfe des Betts in den mit Heizfluid gespeisten ersten beziehungsweise zweiten Kondensator (8, 9, A₁, B₁; 12, 13, B, A) und dann in den mit Kühlfluid gespeisten zweiten beziehungsweise ersten Kondensator zu befördern, wo die Dämpfe kondensieren, und dann das Gas in der Regenerationsphase in das Bett (2) zu leiten.

7. Vorrichtung nach Anspruch 6, mit außerdem Einrichtungen zur Herstellung eines offenen Kreislaufs, um in der Umgebungsluft die in der Regenerationsphase desorbierten Dämpfe des Betts in den mit Heizfluid gespeisten ersten beziehungsweise zweiten Kondensator und dann in der Adsorptionsphase mit dem Abgas (5) in das zweite Bett beziehungsweise das erste Bett (2, 1) zu befördern, und um die Luft mit dem gereinigten Abgas auszuscheiden (11).

8. Vorrichtung nach Anspruch 7, bei weicher der erste und der zweite Kondensator in zwei Teile getrennt sind, wobei der erste dieser Teile (9, 13, B₁, B) sich in der Nähe von jeweils dem ersten oder zweiten Absorptionsbett befindet und der erste (9, B₁) und der zweite (8, A₁) Teil des mit Kühlfluid gespeisten Kondensators jeweils das die einzufangenden Dämpfe enthaltende Abgas (5) und das die in der Regenerationsphase desorbierten Dämpfe des Adsorptionsbetts befördernde Gas empfängt.

9. Vorrichtung nach Anspruch 8, mit außerdem Einrichtungen (17, 18, 19) zur Aufnahme der aus dem ersten (9, B₁) und zweiten (8, A₁) Teil des mit Kühlfluid gespeisten Kondensators stammenden kondensierten Dämpfe.

10. Vorrichtung nach einem der Ansprüche 5 bis 9, bei welcher der erste Kondensator (8, 9, A₁, B₁) und das erste Adsorptionsbett (1) sich in einer ersten Kammer befinden und der zweite Kondensator und das zweite Adsorptionsbett (2) in einer zweiten Kammer, wobei die erste und die zweite Kammer jeweils abwechselnd die Kammer des Verdampfers (6) und des Kondensators (7) der Wärmepumpe bilden.

## Claims

1. Method of capturing vapours contained in a gaseous effluent, in which, in a first step, the vapour-laden gaseous effluent passes first of all through a first condenser supplied with cooling fluid which then acts as condensing medium for condensing some of the vapours, then through a first absorbent bed cooled by the cooling fluid circulating in first heat-exchange means in order to absorb the rest of the vapours, and the purified gaseous effluent is discharged; next, in a second step, when the first absorbent bed is saturated with the absorbed vapours, the vapour-laden gaseous effluent is sent into a second condenser supplied with cooling fluid and then into a second absorbent bed cooled by the cooling fluid circulating in second heat-exchange means, and the purified gaseous effluent is discharged, while simultaneously the first absorbent bed is regenerated by heating with a heating fluid circulating in the first heat-exchange means, then the vapours desorbed from the first absorbent are taken into the second condenser, which is then supplied with cooling fluid, where these vapours desorbed from the first absorbent bed are condensed, then, when the second absorbent bed is saturated, the laden gaseous effluent is again sent into the first condenser, supplied with cooling fluid, and the first absorbent bed cooled by the cooling fluid circulating in the first heat-exchange means, and the second bed is regenerated, and so on, the first and second absorbent beds being alternately in absorption phase and in regeneration phase, respectively; in which method the cooling fluid is the fluid from the evaporator of a reversible heat pump (HP) and the heating fluid is the fluid coming from the condenser of the reversible heat pump.

2. Method according to Claim 1, in which the vapours desorbed from the first absorbent bed, or alternately the second absorbent bed, in regeneration phase, are conveyed by a gas preferably consisting of the effluent purified in the second condenser, or alternatively the first condenser, and then into the first condenser, or alternatively the second condenser, where the vapours are condensed and the gas is sent into the first absorbent bed, or alternatively the second absorbent bed, in regeneration phase.

3. Method according to Claim 1, in which the vapours desorbed from the first absorbent bed, or alternatively the second absorbent bed, in regeneration phase, are taken, in the ambient air introduced, for example, by a valve, into the second condenser, or alternatively the first condenser, and the air is sent into the first absorbent bed, or alternatively the second absorbent bed, in absorption phase with the gaseous effluent and then discharged with said purified gaseous effluent.

4. Method according to any one of the preceding claims, in which the vapours to be captured consist of vapours of organic compounds chosen in particular from volatile organic compounds (COVs).

5. Plant for implementing the method according to any one of Claims 1 to 4, comprising a first condenser/evaporator (8,9, A₁, B₁) supplied alternately with cooling fluid and with heating fluid, a first absorbent bed (1) provided with first heat-exchange means (10) that are supplied alternately with cooling fluid and with heating fluid, a second condenser (12, 13, B, A) supplied alternately with cooling fluid and with heating fluid and a second absorbent bed (2) provided with second heat-exchange means (14, C) which are supplied alternately with evaporating fluid and with heating fluid, means for making a stream of gaseous effluent (5) containing vapours flow alternately through the first condenser (8, 9, A₁, B₁) supplied with cooling fluid and then through the first absorbent bed (1) cooled by the cooling fluid circulating in the first heat-exchange means (10, C₁), or through the second condenser (12, 13, B, A) supplied with cooling fluid then through the second absorbent bed (2) cooled by the cooling fluid circulating in the second heat-exchange means (14, C), and for discharging the purified gaseous element, the other condenser being supplied at the same time with heating fluid and the other absorbent bed being regenerated at the same time by heating with the heating fluid circulating in the heat-exchange means with which it is provided, the first or second condenser/evaporator and the first or second heat-exchange means supplied with cooling fluid being alternately formed respectively by the evaporator (6) of a reversible heat pump, and the other condenser/evaporator and the other heat-exchange means supplied with heating fluid being alternately formed respectively by the condenser (7) of a reversible heat pump.

6. Plant according to Claim 5, which furthermore includes means forming a closed circuit in order to convey, in a gas preferably consisting of the purified effluent, the vapours desorbed from the bed in regeneration phase into the first, or alternatively the second, condenser (8, 9, A₁, B₁; 12, 13, B, A) supplied with heating fluid, and then into the second, or alternatively the first, condenser supplied with cooling fluid, in which the vapours are condensed, and then to send the gas into the bed (2) in regeneration phase.

7. Plant according to Claim 6, which furthermore includes means forming an open circuit for taking, in ambient air, the vapours desorbed from the bed in regeneration phase into the first, or alternatively the second, condenser supplied with heating fluid, and then into the second absorbent bed, or alternatively the first absorbent bed (2, 1), in absorption phase with the gaseous effluent (5), and for discharging the air with the purified gaseous effluent (11).

8. Plant according to Claim 7, in which the first and second condensers are separated into two parts, the first (9, 13, B₁, B) of the parts being located near the first, or alternatively, the second, absorbent bed, the first (9, B₁) and the second (8, A₁) part of the condenser supplied with cooling fluid receiving respectively the effluent (5) containing the vapours to be captured and the gas conveying the vapours desorbed from the absorbent bed in regeneration phase.

9. Plant according to Claim 8, which furthermore includes means (17, 18, 19) for collecting the condensed vapours coming from the first (9, B₁) and second (8, A₁) parts of the condenser supplied with cooling fluid.

10. Plant according to any one of Claims 5 to 9, in which the first condenser (8, 9, A₁, B₁) and the first absorbent bed (1) are placed in a first enclosure and the second condenser and the second absorbent bed (2) on the other hand are placed in a second enclosure, said first and second enclosures constituting alternately the enclosure for the evaporator (6) and the enclosure for the condenser (7) of the heat pump, respectively.
